# EUROPEAN PATENT SPECIFICATION

(11) **EP 4 440 210 B1**
(45) Date of publication and mention of the grant of the patent: **20.05.2026**
(21) Application number: 22913667.6
(22) Date of filing: 17.10.2022
(51) Int. Cl.: H04W 56/00

(54) **CLOCK SYNCHRONIZATION METHOD, APPARATUS AND SYSTEM**
TAKTSYNCHRONISATIONSVERFAHREN, -VORRICHTUNG UND -SYSTEM
PROCÉDÉ, APPAREIL ET SYSTÈME DE SYNCHRONISATION D'HORLOGE

(30) Priority: 31.12.2021 CN 202111664972
(43) Date of publication of application: 02.10.2024
(73) Proprietor: Huawei Technologies Co., Ltd., Shenzhen, Guangdong 518129 (CN)
(72) Inventor: ZHOU, Guangjian, Shenzhen, Guangdong 518129 (CN)
(74) Representative: MERH-IP Matias Erny Reichl Hoffmann Patentanwälte PartG mbB
(86) International application number: PCT/CN2022/125640
(87) International publication number: WO 2023/124403

(56) References cited:
- CN-A- 102 830 405
- CN-A- 105 610 534
- CN-A- 108 882 356
- CN-A- 109 656 126
- CN-A- 114 466 444
- JP-A- 2005 134 215
- US-A1- 2021 037 490
- US-B1- 7 327 699
- US-B2- 10 925 026

## Description

### TECHNICAL FIELD

This application relates to the communication field, and in particular, to a clock synchronization method, an apparatus, and a system.

### BACKGROUND

A global navigation satellite system (Global Navigation Satellite System, GNSS) is a navigation system for positioning. The GNSS is a system that can provide users with all-time space-based radio navigation and positioning at any location on the earth's surface or in near-earth space. In a communication system, a GNSS technology may be used for clock synchronization. A GNSS receiver is deployed in an access network device in the communication system. The access network device obtains information about a satellite by using the GNSS receiver, and corrects a local clock of the access network device based on the information about the satellite. However, an error exists in the local clock that is corrected by using this method.

CN102830405A discloses a multi-point positioning system high-precision synchronous timing method, comprising at least one GNSS receiving unit having an internal GNSS timing time and a GNSS master control center control unit having an internal GNSS timing time. The a GNSS master control center control unit periodically receives observation information from each remote GNSS receiver unit as the comparison standard for time synchronization of the remote GNSS receiver units, takes the final comparison parameters as the clock synchronization control parameters of each remote GNSS receiver unit and periodically transmits the final comparison parameters to each remote GNSS receiver unit for synchronization clock control.

### SUMMARY

The present invention is defined by the independent claims. In the following, parts of the description and drawings referring to examples which do not necessarily comprise all features of the invention as currently claimed are not represented as embodiments of the invention but as examples useful for understanding the embodiments of the invention. Embodiments of this application describe a clock synchronization method, an apparatus, and a system.

According to a first aspect, an embodiment of this application provides a clock synchronization method. The method is performed by a first apparatus. The method includes: The first apparatus obtains a first time difference and a second time difference. The first time difference is a time difference between the first apparatus and a satellite. The first time difference is determined based on a first pulse signal and information about the satellite. The second time difference is a time difference between a second apparatus and the satellite, and the second time difference comes from the second apparatus. The first apparatus and the second apparatus belong to a same access network device. The first apparatus obtains clock synchronization information between the first apparatus and the second apparatus based on the first time difference and the second time difference. According to the foregoing solution, the first apparatus can eliminate a part of common errors in satellite transmission based on calculation of the first time difference and the second time difference, to further improve accuracy of the clock synchronization information. In addition, clock synchronization can be implemented in the method without relying on a backhaul network.

For example, that the first apparatus obtains clock synchronization information between the first apparatus and the second apparatus based on the first time difference and the second time difference may be understood as that the first apparatus adjusts a local clock of the first apparatus based on the first time difference and the second time difference, and uses the local clock as clock synchronization information, to obtain clock synchronization information of the first apparatus. Finally, the clock synchronization information is used for adjusting a local clock of the second apparatus to keep consistent with the local clock of the first apparatus. The foregoing descriptions are also applicable to a method provided in another aspect of this application. Details are not described again.

In a possible implementation, the first apparatus sends the clock synchronization information to the second apparatus. This implementation may also be understood as that the second apparatus is synchronized with the first apparatus, or the second apparatus tracks the first apparatus, and finally, clock information of the second apparatus is kept consistent with clock information of the first apparatus.

In a possible implementation, the first apparatus is a wireless device controller in the access network device, and the second apparatus is a wireless device in the access network device. The wireless device controller may also be referred to as a radio apparatus controller, may also be referred to as a radio controller, may also be referred to as a radio control unit, or may have another name. This is not limited in this application. Specifically, the wireless device controller may be a baseband unit. To be specific, the wireless device controller may be any apparatus having a function the same as or similar to that of the baseband unit. The wireless device may also be referred to as a radio device, a radio apparatus, or a radio unit, or may have another name. This is not limited in this application. Specifically, the wireless device may be an active antenna unit, or may be a remote radio unit. To be specific, the wireless device controller may be any apparatus having a function the same as or similar to that of the active antenna unit or the remote radio unit. The foregoing descriptions are also applicable to a method provided in another aspect of this application. Details are not described again.

In a possible implementation, that the first apparatus and the second apparatus belong to a same access network device includes: Both the first apparatus and the second apparatus are wireless devices in the access network device.

In a possible implementation, the first pulse signal is a pulse per second signal. The pulse per second signal may be a 1 pulse per second signal, which indicates a one-second time signal of the satellite. The foregoing descriptions are also applicable to a method provided in another aspect of this application. Details are not described again.

In a possible implementation, the information about the satellite includes an identifier of the satellite, and may further include at least one of the following: time information of the satellite, status information of the satellite, and ephemeris data information of the satellite. The identifier of the satellite identifies the satellite. To be specific, the first apparatus may determine a specific satellite based on the identifier. The time information of the satellite, the status information of the satellite, and the ephemeris data information of the satellite are all used for calculating the first time difference. The foregoing descriptions are also applicable to a method provided in another aspect of this application. Details are not described again.

In a possible implementation, that the first apparatus obtains clock synchronization information of the first apparatus based on the first time difference and the second time difference includes: The first apparatus calculates a third time difference based on the first time difference and the second time difference. The first apparatus determines an average relative phase frequency difference based on the third time difference. The first apparatus adjusts local clock information of the first apparatus based on the average relative phase frequency difference.

In a possible implementation, that the first time difference is determined based on a first pulse signal and information about the satellite includes: The first apparatus receives the first pulse signal and the information about the satellite from a first satellite receiver. The first apparatus determines the first time difference based on the first pulse signal and the information about the satellite.

According to a second aspect, an embodiment of this application provides a clock synchronization method. The method is performed by a second apparatus. The method includes: The second apparatus sends a second time difference to a first apparatus. The second time difference is determined based on a second pulse signal and information about a satellite. The second time difference is a time difference between the second apparatus and the satellite. The first apparatus and the second apparatus belong to a same access network device. The second apparatus receives clock synchronization information from the first apparatus. The second apparatus obtains local clock information of the second apparatus based on the clock synchronization information. According to the foregoing solution, the second apparatus is synchronized with the first apparatus, to keep clocks of different apparatuses in a first access network device consistent, and in the method, a requirement for stability and a latency characteristic of a network system in which the first apparatus and the second apparatus are located is lowered. This further reduces dependency of performance of clock synchronization on the network system.

For example, the clock synchronization information is clock synchronization information between the first apparatus and the second apparatus.

In a possible implementation, the second apparatus obtains the second time difference. Specifically, the second apparatus determines the second time difference based on the second pulse signal and the information about the satellite. In a possible implementation, that the first apparatus and the second apparatus belong to a same access network device includes: The first apparatus is a wireless device controller in the access network device, and the second apparatus is a wireless device in the access network device.

In a possible implementation, that the first apparatus and the second apparatus belong to a same access network device includes: Both the first apparatus and the second apparatus are wireless devices in the access network device.

In a possible implementation, the second pulse signal is a pulse per second signal.

In a possible implementation, the information about the satellite includes an identifier of the satellite, and may further include at least one of the following: time information of the satellite, status information of the satellite, and ephemeris data information of the satellite.

In a possible implementation, that the second apparatus obtains a second time difference, where the second time difference is determined based on a second pulse signal and information about a satellite includes: The second apparatus receives the second pulse signal and the information about the satellite from a second satellite receiver. The second apparatus determines the second time difference based on the second pulse signal and the information about the satellite.

According to a third aspect, an embodiment of this application provides a clock synchronization method. The method is performed by a first apparatus. The method includes: The first apparatus receives a first time difference from a second apparatus. The first time difference is a time difference between the second apparatus and a satellite. The first apparatus receives a second time difference from a third apparatus. The second time difference is a time difference between the third apparatus and the satellite. The first apparatus, the second apparatus, and the third apparatus belong to a same access network device. The first apparatus obtains clock synchronization information among the first apparatus, the second apparatus, and the third apparatus based on the first time difference and the second time difference.

In a possible implementation, the method further includes: The first apparatus sends the clock synchronization information to the second apparatus and the third apparatus.

In a possible implementation, that the first apparatus, the second apparatus, and the third apparatus belong to a same access network device includes: The first apparatus is a wireless device controller in the access network device, and the second apparatus and the third apparatus are wireless devices in the access network device.

In a possible implementation, the first apparatus receives information about the satellite from the second apparatus. The information about the satellite includes an identifier of the satellite, and may further include at least one of the following: time information of the satellite, status information of the satellite, and ephemeris data information of the satellite.

According to a fourth aspect, an embodiment of this application provides a clock synchronization method. The method includes: A first apparatus obtains a first time difference, and a second apparatus obtains a second time difference. The second apparatus sends the second time difference to the first apparatus. The first apparatus obtains clock synchronization information between the first apparatus and the second apparatus based on the first time difference and the second time difference. The second apparatus receives the clock synchronization information from the first apparatus. The second apparatus obtains local clock information of the second apparatus based on the clock synchronization information.

For beneficial effects and possible implementations of this aspect, refer to the descriptions of the first aspect and the second aspect. Details are not described again.

According to a fifth aspect, a second apparatus obtains a first time difference, and a third apparatus obtains a second time difference. The second apparatus sends the first time difference to a first apparatus, and the third apparatus sends the second time difference to the first apparatus. The first apparatus obtains clock synchronization information among the first apparatus, the second apparatus, and the third apparatus based on the first time difference and the second time difference. The first apparatus sends the clock synchronization information to the second apparatus and the third apparatus. The second apparatus obtains local clock information of the second apparatus based on the clock synchronization information. The third apparatus obtains local clock information of the third apparatus based on the clock synchronization information.

For beneficial effects and possible implementations of this aspect, refer to the descriptions of the second aspect and the third aspect. Details are not described again.

According to a sixth aspect, an embodiment of this application provides a communication apparatus, including a processor. The processor is configured to read a program from a memory and run the program, to implement the method according to any one of the first aspect or the possible implementations of the first aspect, or implement the method according to any one of the second aspect or the possible implementations of the second aspect, or implement the method according to any one of the third aspect or the possible implementations of the third aspect.

According to a seventh aspect, an embodiment of this application provides a communication system, including a first apparatus and a second apparatus. The first apparatus may perform the method according to any one of the first aspect or the possible implementations of the first aspect, or implement the method according to any one of the third aspect or the possible implementations of the third aspect, or the second apparatus may perform the method according to any one of the second aspect or the possible implementations of the second aspect.

In a possible communication system, the communication system further includes a third apparatus. The third apparatus may perform the method according to any one of the second aspect or the possible implementations of the second aspect.

According to an eighth aspect, an embodiment of this application provides a computer program product including instructions. When the computer program product runs on a computer, the computer is enabled to perform the method according to any one of the first aspect or the possible implementations of the first aspect or the method according to any one of the second aspect or the possible implementations of the second aspect, or implement the method according to any one of the third aspect or the possible implementations of the third aspect, or implement the method according to any one of the fourth aspect or the possible implementations of the fourth aspect, or implement the method according to any one of the fifth aspect or the possible implementations of the fifth aspect.

According to a ninth aspect, an embodiment of this application provides a computer-readable storage medium. The computer-readable storage medium stores instructions. When the instructions are run on a computer, a processor is enabled to perform the method according to any one of the first aspect or the possible implementations of the first aspect or the method according to any one of the second aspect or the possible implementations of the second aspect, or implement the method according to any one of the third aspect or the possible implementations of the third aspect, or implement the method according to any one of the fourth aspect or the possible implementations of the fourth aspect, or implement the method according to any one of the fifth aspect or the possible implementations of the fifth aspect.

### BRIEF DESCRIPTION OF DRAWINGS

FIG. 1 is a schematic diagram of a network architecture to which an embodiment of this application is applicable;
FIG. 2A is a schematic diagram of a clock synchronization method to which an embodiment of this application is applicable;
FIG. 2B is a schematic diagram of another clock synchronization method to which an embodiment of this application is applicable;
FIG. 3 is a schematic diagram of a clock synchronization method according to an embodiment of this application;
FIG. 4 is a schematic diagram of another clock synchronization method according to an embodiment of this application;
FIG. 5 is a schematic diagram of a clock synchronization system architecture according to an embodiment of this application;
FIG. 6 is a schematic diagram of still another clock synchronization method according to an embodiment of this application;
FIG. 7 is a schematic diagram of another clock synchronization system architecture according to an embodiment of this application;
FIG. 8 is a schematic diagram of still another clock synchronization method according to an embodiment of this application;
FIG. 9 is a schematic diagram of still another clock synchronization method according to an embodiment of this application;
FIG. 10 is a schematic diagram of still another clock synchronization system architecture according to an embodiment of this application;
FIG. 11A and FIG. 11B are a schematic diagram of still another clock synchronization method according to an embodiment of this application;
FIG. 12 is a schematic diagram of a communication apparatus according to an embodiment of this application; and
FIG. 13 is a schematic diagram of another communication apparatus according to an embodiment of this application.

### DESCRIPTION OF EMBODIMENTS

To make the objectives, technical solutions, and advantages of embodiments of this application clearer, the following further describes embodiments of this application in detail with reference to the accompanying drawings. The technical solutions in embodiments of this application may be applied to various communication systems, for example, a long term evolution (long term evolution, LTE) system, an LTE frequency division duplex (frequency division duplex, FDD) system, and an LTE time division duplex (time division duplex, TDD), a 5th generation (5th generation, 5G) mobile communication system, or a new radio (new radio, NR) system, or applied to a future communication system or another similar communication system. A network architecture and a service scenario described in this application are intended to describe the technical solutions in this application more clearly, but do not constitute a limitation on the technical solutions provided in this application. A person of ordinary skill in the art may know that with evolution of the network architecture and emergence of a new service scenario, the technical solutions provided in this application are also applicable to similar technical problems.

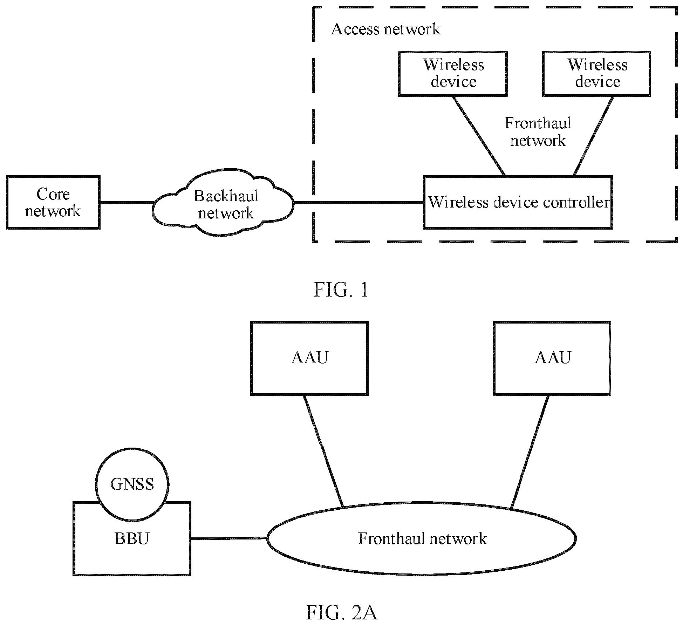

FIG. 1 is an architectural diagram of a communication system to which this application is applicable. The system shows an access network, a backhaul network, and a core network. The core network is a network including a plurality of functional network elements. The plurality of functional network elements are configured to manage a user requirement and provide different types of communication services for a user. For the core network, refer to descriptions in the 3rd Generation Partnership Project (3rd Generation Partnership Project, 3GPP).

The access network may be referred to as a radio access network (Radio Access Network, RAN). The RAN is configured to implement a radio-related function. A node in the RAN may also be referred to as an access network device or a base station, and is configured to connect a terminal device to a radio network. The access network device may be a base station (base station), an evolved NodeB (evolved NodeB, eNodeB) in an LTE system or an LTE-advanced (LTE-Advanced, LTE-A) system, a next generation NodeB (next generation NodeB, gNB) in 5G communication system, a transmission reception point (transmission reception point, TRP), a baseband unit (baseband unit, BBU), a Wi-Fi access point (access point, AP), a base station in a future mobile communication system, an access node in a Wi-Fi system, or the like. The radio access network device may alternatively be a module or a unit that completes some functions of the base station. For example, the radio access network device may be a central unit (central unit, CU) or a distributed unit (distributed unit, DU). A specific technology and a specific device form used by the radio access network device are not limited in embodiments of this application. For example, in a network structure, the radio access network device may be a CU node, a DU node, or an access network device including a CU node and a DU node. Specifically, the CU node is configured to support protocols such as radio resource control (radio resource control, RRC), a packet data convergence protocol (packet data convergence protocol, PDCP), and a service data adaptation protocol (service data adaptation protocol, SDAP). The DU node is configured to support a radio link control (radio link control, RLC) layer protocol, a media access control (media access control, MAC) layer protocol, and a physical layer protocol. For ease of description, the radio access network device is referred to as a RAN for short in the following.

The backhaul network (backhaul transport network) is configured to connect the access network and the core network, and provides a function of transmitting information between the access network and the core network.

As shown in FIG. 1, the access network may include a wireless device controller, a fronthaul network (fronthaul transport network), and a wireless device. The wireless device controller may also be referred to as a radio apparatus controller, may also be referred to as a radio controller, may also be referred to as a radio control unit, or may have another name. This is not limited in this application. The wireless device controller may be a unit or a module configured to process a baseband signal. Specifically, the wireless device controller may be a baseband unit. To be specific, the wireless device controller may be any apparatus having a function the same as or similar to that of the baseband unit, for example, a baseband unit (BaseBand Unit, BBU). The wireless device may also be referred to as a radio device, a radio apparatus, or a radio unit, or may have another name. This is not limited in this application. The wireless device may be a unit or a module configured to process a radio frequency signal. Specifically, the wireless device may be an active antenna unit, or may be a remote radio unit. To be specific, the wireless device may be any apparatus having a function the same as or similar to that of the active antenna unit or the remote radio unit, for example, a remote radio unit (Remote Radio Unit, RRU), or may be an active antenna unit (Active Antenna Unit, AAU). This is not limited in this application. The fronthaul network is a network between the wireless device controller and the wireless device. The wireless device controller and the wireless device may be connected by using an optical fiber, or may be connected by using another connection line. This is not limited in this application. The fronthaul network may use a common public radio interface (Common Public Radio Interface, CPRI) protocol, may use an enhanced common public radio interface (Enhanced Common Public Radio Interface, eCPRI) protocol, or may use another type of protocol. In this application, an example in which a wireless device controller included in a base station device is a BBU and a wireless device is an AAU is used for description. The foregoing descriptions are also applicable to a method provided in another aspect of this application. Details are not described again.

A global navigation satellite system (Global Navigation Satellite System, GNSS) is a navigation system for positioning. The GNSS is a system that can provide users with all-time space-based radio navigation and positioning at any location on the earth's surface or in near-earth space. The GNSS has a time serving function, and the time serving function may also be understood as a clock calibration function or a clock synchronization function. In this application, clock synchronization is used as an example for description subsequently. For example, the GNSS is used for clock synchronization in an access network. A GNSS receiver is deployed in the access network, and the GNSS receiver receives satellite navigation information from a satellite. The access network obtains the satellite navigation information by using the GNSS receiver, and determines an error between a local clock of the access network and a clock of the satellite based on the satellite navigation information, to further adjust the local clock based on the error. Finally, clock synchronization is implemented.

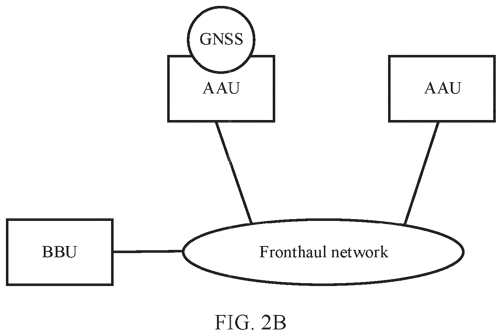

Specifically, for a clock synchronization method implemented by an access network by using a GNSS, refer to descriptions shown in FIG. 2A and FIG. 2B.

FIG. 2A is used as an example. The figure shows a GNSS-based clock synchronization method. As shown in the figure, a GNSS receiver is deployed on a BBU side in an access network. Similar to the foregoing method, the GNSS receiver obtains satellite navigation information from a satellite. After obtaining the satellite navigation information from the GNSS receiver, a BBU determines an error between a local clock of the BBU and a clock of the satellite based on the satellite navigation information, and finally adjusts the local clock of the BBU based on the error. An adjusted local clock may be considered as a system clock. Subsequently, in a possible implementation, the BBU may transfer the system clock to an AAU with reference to a precision clock synchronization protocol standard of a network measurement and control system, that is, the Institute of Electrical and Electronics Engineers (Institute of Electrical and Electronics Engineers, IEEE) 1588 protocol, to implement clock synchronization of a communication system.

FIG. 2B is used as an example. The figure shows another GNSS-based clock synchronization method. As shown in the figure, a GNSS receiver is deployed on an AAU side in an access network. Similar to the foregoing method, the GNSS receiver obtains satellite navigation information from a satellite. After obtaining the satellite navigation information from the GNSS receiver, an AAU sends the satellite navigation information to a BBU. The BBU calculates a time difference between a satellite clock and a local clock of the AAU based on a comparison between the satellite clock in the satellite navigation information and the local clock, and further corrects a local clock of the BBU based on the time difference to obtain a more accurate moment. A corrected moment is used as a system clock of a communication system in which a base station device of the BBU is located. Subsequently, the BBU transmits the system clock to the AAU with reference to a precision clock synchronization protocol standard of a network measurement and control system, that is, the IEEE 1588 protocol, so that a radio network is kept consistent with a clock related to transmission.

The foregoing two methods for obtaining the system clock by the GNSS may satisfy a basic service requirement of an existing communication system, that is, an error relative to coordinated universal time (Coordinated Universal Time, UTC) may be controlled to approximately 1.5 microseconds (microseconds, µs). However, the methods cannot satisfy a service that has a high requirement for a time error, for example, an inter-site coordination service. Errors of the methods may be caused by an atmospheric environment factor, may be caused by a satellite system error, may be caused by a multipath error caused by reflection of an object when a satellite reaches the ground, or may be caused by another error.

Based on the foregoing problem, this application provides a clock synchronization method.

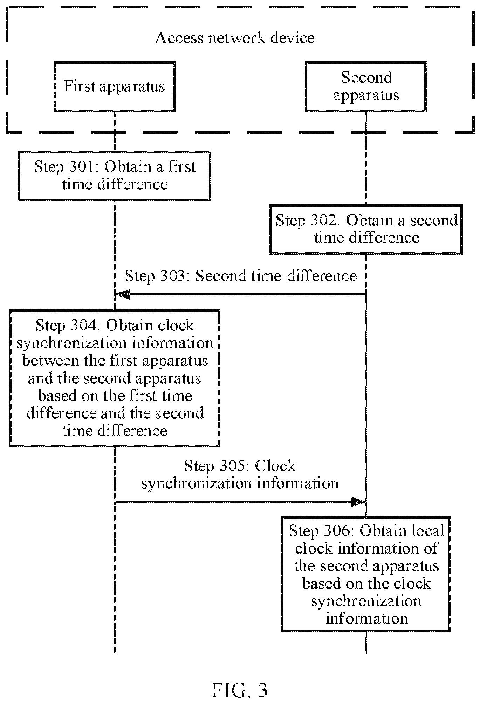

FIG. 3 is a schematic diagram of a clock synchronization method to which this application is applicable. The method shown in FIG. 3 may be performed by a first apparatus and a second apparatus. The first apparatus and the second apparatus belong to a same access network device. The access network device may be the access network device in the network architecture shown in FIG. 1.

In a possible implementation, the first apparatus in the method may be a wireless device controller in the access network device, and the second apparatus may be a wireless device in the access network device.

In another possible implementation, both the first apparatus and the second apparatus in the method are wireless devices in the access network device.

The method may include the following steps.

Step 301: The first apparatus obtains a first time difference.

For example, the first time difference is a time difference between the first apparatus and a satellite. The first apparatus determines the first time difference based on a first pulse signal and information about the satellite.

In a possible implementation, that the first apparatus determines the first time difference based on a first pulse signal and information about the satellite includes: The first apparatus receives the first pulse signal and the information about the satellite from a first satellite receiver, and the first apparatus determines the first time difference based on the first pulse signal and the information about the satellite.

In a possible implementation, the first pulse signal is a pulse per second signal. The pulse per second signal may be a 1 pulse per second (pulse per second, PPS) signal. For example, the first apparatus receives the information about the satellite from a satellite receiver of the first apparatus, and generates the 1PPS signal based on the information about the satellite.

In a possible implementation, the information about the satellite includes an identifier of the satellite, and may further include at least one of the following: time information of the satellite, status information of the satellite, and ephemeris data information of the satellite. The identifier of the satellite identifies the satellite. To be specific, the first apparatus and the second apparatus may determine, based on the identifier, a specific satellite whose information is the information about the satellite. The time information of the satellite, the status information of the satellite, and the ephemeris data information of the satellite are all used for calculating the first time difference and a second time difference.

Step 302: The second apparatus obtains the second time difference.

For example, the second time difference is a time difference between the second apparatus and the satellite, and the second time difference is determined by the second apparatus based on a second pulse signal and the information about the satellite.

Similarly, the second pulse signal may be a pulse per second signal. For the pulse per second signal, refer to the foregoing pulse per second signal.

In a possible implementation, that the second apparatus obtains the second time difference, where the second time difference is determined based on the second pulse signal and the information about the satellite includes: The second apparatus receives the second pulse signal and the information about the satellite from a second satellite receiver. The second apparatus determines the second time difference based on the second pulse signal and the information about the satellite.

It should be understood that step 301 may be performed with step 302 simultaneously, may be performed before step 302, or may be performed after step 302.

Step 303: The second apparatus sends the second time difference to the first apparatus.

Accordingly, the first apparatus receives the second time difference from the second apparatus.

Step 304: The first apparatus obtains clock synchronization information between the first apparatus and the second apparatus based on the first time difference and the second time difference.

For example, that the first apparatus obtains clock synchronization information between the first apparatus and the second apparatus based on the first time difference and the second time difference may be understood as that the first apparatus adjusts a local clock of the first apparatus based on the first time difference and the second time difference, and uses the local clock as the clock synchronization information between the first apparatus and the second apparatus. Finally, the clock synchronization information is used for adjusting a local clock of the second apparatus, so that the local clock of the second apparatus is kept consistent with the local clock of the first apparatus.

In a possible implementation, that the first apparatus obtains clock synchronization information of the first apparatus based on the first time difference and the second time difference includes: The first apparatus calculates a third time difference based on the first time difference and the second time difference. The first apparatus determines an average relative phase frequency difference based on the third time difference. The first apparatus adjusts local clock information of the first apparatus based on the average relative phase frequency difference.

Step 305: The first apparatus sends the clock synchronization information to the second apparatus.

Correspondingly, the second apparatus receives the clock synchronization information from the first apparatus.

For example, the second apparatus may obtain the clock synchronization information from the first apparatus by using a fronthaul network.

Step 306: The second apparatus obtains local clock information of the second apparatus based on the clock synchronization information of the first apparatus.

It should be understood that, in this step, the second apparatus keeps the local clock information of the second apparatus consistent with clock information in the clock synchronization information, that is, the second apparatus obtains one piece of time information from the clock synchronization information, and adjusts the local clock of the second apparatus to the time information.

Step 305 and step 306 may also be understood as that the second apparatus is synchronized with the first apparatus, or the second apparatus tracks the first apparatus, and finally, clock information of the second apparatus is kept consistent with clock information of the first apparatus.

According to the method shown in FIG. 3, the first apparatus may eliminate a part of common errors in satellite transmission based on calculation of the first time difference and the second time difference, to improve accuracy of the clock synchronization information. In addition, the method may be applied in an access network range, so that clock synchronization can be implemented without relying on a backhaul network.

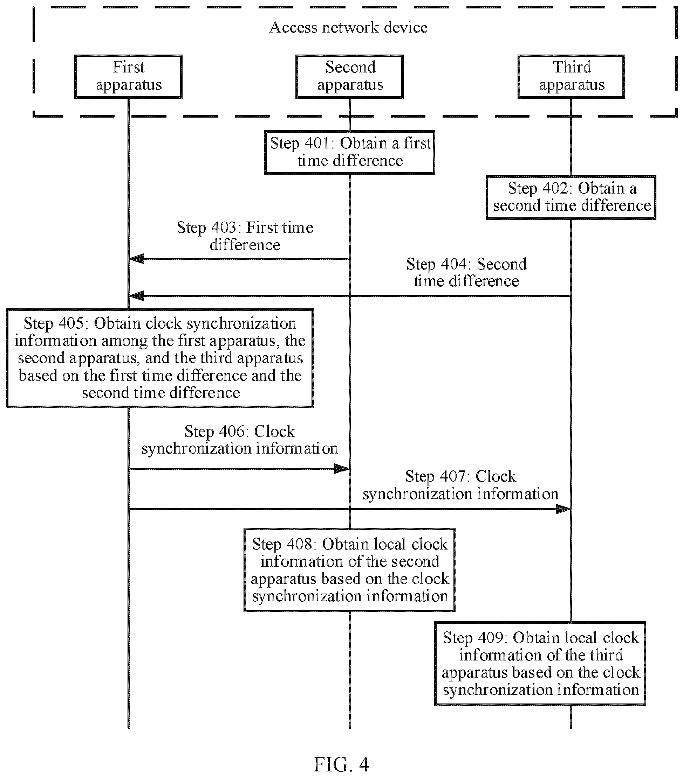

FIG. 4 is a schematic diagram of another clock synchronization method to which this application is applicable. The method shown in FIG. 4 may be performed by a first apparatus, a second apparatus, and a third apparatus. The first apparatus, the second apparatus, and the third apparatus belong to a same access network device. The access network device may be the access network device in FIG. 1. In the method shown in the figure, the first apparatus may be a wireless device controller in the access network device, and the second apparatus and the third apparatus may be wireless devices in the access network device. The method may include the following steps.

Step 401: The second apparatus obtains a first time difference.

For example, the first time difference is a time difference between the second apparatus and a satellite, and the first time difference is determined by the second apparatus based on a first pulse signal and information about the satellite. In a possible implementation, the first apparatus receives the first pulse signal and the information about the satellite from a first satellite receiver, and the first apparatus determines the first time difference based on the first pulse signal and the information about the satellite. For the first pulse per second signal, refer to the description of the first pulse per second signal in FIG. 3.

The information about the satellite includes an identifier of the satellite, and the identifier of the satellite may identify the satellite. In other words, the identifier of the satellite may be used for distinguishing a specific satellite whose information is the information about the satellite. In addition, the information about the satellite may further include at least one of the following: time information of the satellite, status information of the satellite, and ephemeris data information of the satellite. The time information of the satellite, the status information of the satellite, and the ephemeris data information of the satellite are all used for calculating the first time difference and the second time difference.

Step 402: The third apparatus obtains a second time difference.

The second time difference is a time difference between the third apparatus and the satellite, and the second time difference is determined by the third apparatus based on a second pulse signal and the information about the satellite. In a possible implementation, the third apparatus receives the second pulse signal and the information about the satellite from a second satellite receiver, and the third apparatus determines the first time difference based on the second pulse signal and the information about the satellite. For the second pulse per second signal, refer to the descriptions of the second pulse per second signal in FIG. 3.

An execution sequence of step 401 and step 402 is not limited in this application.

Step 403: The second apparatus sends the first time difference to the first apparatus.

Correspondingly, the first apparatus receives the first time difference from the first apparatus.

In a possible implementation, the first apparatus further receives information about the satellite from the second apparatus.

Step 404: The third apparatus sends the second time difference to the first apparatus.

Correspondingly, the first apparatus receives the first time difference from the third apparatus.

In a possible implementation, the first apparatus further receives information about the satellite from the third apparatus. Specifically, the first apparatus may determine, based on the information about the satellite received from the third apparatus and the information about the satellite received from the second apparatus, that the first time difference is a time difference between the satellite and the second apparatus, and the second time difference is a time difference between the satellite and the third apparatus. In this way, it can be ensured that the time differences provided by the second apparatus and the third apparatus are the time difference between the second apparatus and the satellite and the time difference between the third apparatus and the satellite, respectively.

An execution sequence of step 403 and step 404 is not limited in this application.

Step 405: The first apparatus obtains clock synchronization information among the first apparatus, the second apparatus, and the third apparatus based on the first time difference and the second time difference.

For this step, refer to the descriptions of step 304 in FIG. 3.

Step 406: The first apparatus sends the clock synchronization information to the second apparatus.

Step 407: The first apparatus sends the clock synchronization information to the third apparatus.

For step 406 and step 407, refer to the descriptions of step 305 in FIG. 3.

An execution sequence of step 406 and step 407 is not limited in this application.

Step 408: The second apparatus obtains local clock information of the second apparatus based on the clock synchronization information.

Step 409: The third apparatus obtains local clock information of the third apparatus based on the clock synchronization information.

For step 408 and step 409, refer to the descriptions of step 306 in FIG. 3.

An execution sequence of step 408 and step 409 is not limited in this application.

According to the method shown in FIG. 4, the first apparatus may eliminate a part of common errors in satellite transmission based on calculation of the first time difference and the second time difference, to further improve accuracy of the clock synchronization information. In addition, the method may be applied in an access network range, so that clock synchronization can be implemented without relying on a backhaul network.

For ease of description, a wireless device controller in an access network device mentioned below in this application is described by using a baseband unit as an example. The baseband unit is referred to as a BBU for short. A wireless device in a base station device is described by using an active antenna unit as an example. The active antenna unit is referred to as an AAU for short. A satellite receiver is referred to as a GNSS for short.

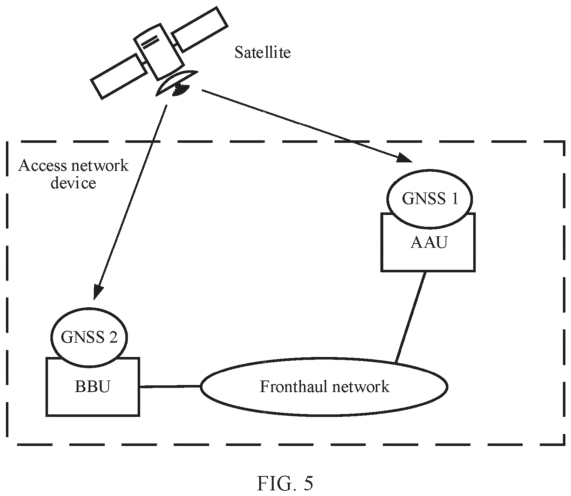

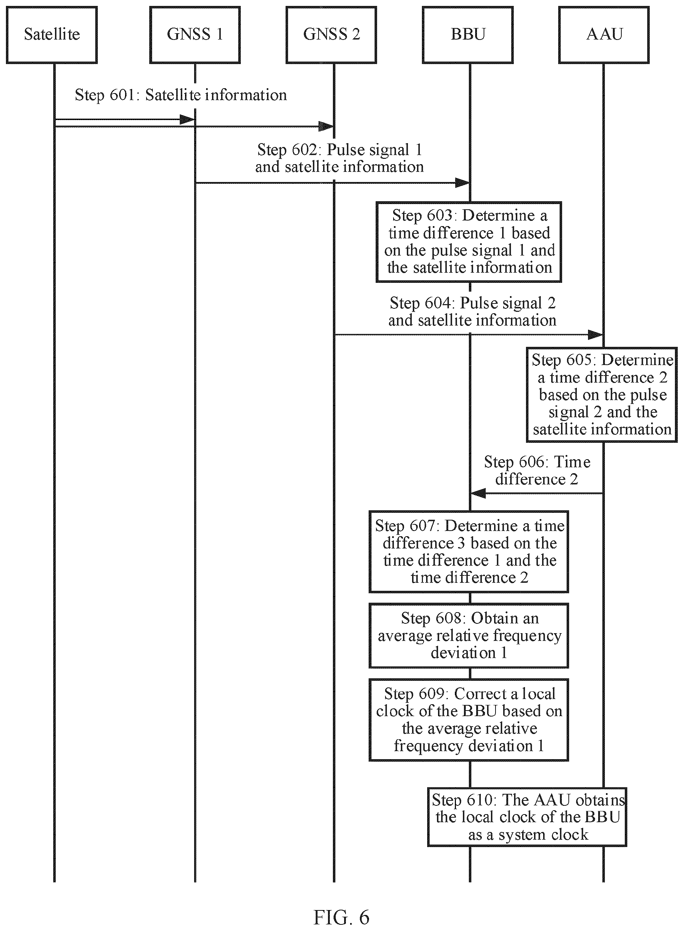

For example, two GNSSs, that is, a GNSS 1 and a GNSS 2, are deployed in a clock synchronization network architecture. FIG. 5 is a schematic diagram of a clock synchronization system structure. As shown in FIG. 5, the GNSS 1 is deployed on a BBU side, and the GNSS 2 is deployed on an AAU side. In addition, a BBU and an AAU belong to a same access network device. Specifically, during deployment, the GNSS 1 may be connected to the BBU side through a feeder, and the GNSS 2 may be connected to the AAU side through a feeder. Based on the system architecture shown in FIG. 5, FIG. 6 is a schematic interaction flowchart of a clock synchronization method according to an embodiment of this application. With reference to the method shown in FIG. 3, the method may include the following steps.

Step 601: A satellite sends satellite information to the GNSS 1 and the GNSS 2.

Correspondingly, the GNSS 1 receives the satellite information from the satellite, and the GNSS 2 receives the satellite information from the satellite.

It may be understood that the satellite sends the satellite information to both the GNSS 1 and the GNSS 2. That is, the GNSS 1 and the GNSS 2 track a same satellite.

For example, the satellite information may include time information, status information, and ephemeris information. The time information may include UTC time information of the satellite, and represents time of the satellite. For the satellite information, refer to the descriptions of the information about the satellite in FIG. 3.

Step 602: The GNSS 1 sends a pulse signal 1 and the satellite information to the BBU.

For the pulse signal 1 in the method, refer to the descriptions of the first pulse signal in FIG. 3. For the BBU, refer to the descriptions of the first apparatus in FIG. 3.

For example, the pulse signal 1 is a pulse signal of the GNSS 1, and the pulse signal may be a 1PPS signal. The pulse signal 1 may represent clock information of the satellite. The clock information includes phase information and frequency information of a clock of the satellite. The phase information and the frequency information may be used for clock synchronization.

Specifically, the GNSS 1 sends the pulse signal 1 to a phase discrimination unit (not shown) of the BBU, and sends the satellite information to a processing unit (not shown) of the BBU. For example, the processing unit may be a satellite data processing unit. In other words, the processing unit is a processing unit configured to process the satellite information.

Step 603: The BBU determines a time difference 1 based on the pulse signal 1 and the satellite information.

For this step, refer to the descriptions of the first apparatus in step 301 in FIG. 3. For the time difference 1 in the method, refer to the descriptions of the first time difference in FIG. 3.

Specifically, the phase discrimination unit of the BBU obtains a pulse signal a of a local clock of the BBU, and performs phase discrimination on the pulse signal a and the pulse signal 1, to obtain a clock phase difference between the BBU and the satellite. The pulse signal a and the pulse signal 1 may be pulse signals of a same type. Then, the processing unit of the BBU obtains the clock phase difference between the BBU and the satellite from the phase discrimination unit of the BBU. Then, the processing unit of the BBU calculates the time difference 1 between the BBU and the satellite based on the clock phase difference between the BBU and the satellite and the satellite information. Specifically, the processing unit of the BBU calculates the time difference 1 between the BBU and the satellite based on the clock phase difference between the BBU and the satellite, and the status information, the ephemeris information, and the time information in the satellite information.

Step 604: The GNSS 2 sends a pulse signal 2 and the satellite information to the AAU.

For the AAU in the method, refer to the descriptions of the second apparatus in FIG. 3. For the pulse signal 2 in the method, refer to the descriptions of the second pulse signal in FIG. 3.

Specifically, the GNSS 2 sends the pulse signal 2 to a phase discrimination unit (not shown) of the AAU, and sends the satellite information to a processing unit (not shown) of the AAU. For example, the processing unit may be a satellite data processing unit. In other words, the processing unit is a processing unit configured to process the satellite information.

Step 605: The AAU determines a time difference 2 based on the pulse signal 2 and the satellite information.

For this step, refer to the descriptions of the second apparatus in step 301 in FIG. 3. For the time difference 2 in the method, refer to the descriptions of the second time difference in step 301 in FIG. 3.

Specifically, the phase discrimination unit of the AAU obtains a pulse signal b of a local clock of the AAU, and performs phase discrimination on the pulse signal b and the pulse signal 2, to obtain a clock phase difference between the AAU and the satellite. Similarly, the pulse signal b and the pulse signal 2 are signals of a same type. Then, the processing unit of the AAU obtains the clock phase difference between the AAU and the satellite from the phase discrimination unit of the AAU. Then, the processing unit of the AAU calculates the time difference 2 between the AAU and the satellite based on the clock phase difference between the AAU and the satellite and the satellite information.

Step 606: The AAU sends the time difference 2 to the BBU.

For this step, refer to the descriptions of step 302 in FIG. 3.

It should be understood that execution of step 602 and step 603 is independent of execution of step 604 to step 606, but finally, step 602 and step 603 and step 604 to step 606 are all performed before step 607.

Step 607: The BBU determines a time difference 3 based on the time difference 1 and the time difference 2.

For example, the BBU calculates a difference between the time difference 1 and the time difference 2, to obtain the time difference 3. Specifically, the step is performed by the processing unit of the BBU.

For the time difference 3, refer to the descriptions of the third time difference in the method shown in FIG. 3.

Step 608: The BBU obtains an average relative frequency deviation 1.

Step 601 to step 607 may be repeatedly performed at least once, and at least two time differences 3 may be obtained. The at least two time differences may be different. In other words, the BBU obtains a time difference 31, ..., and a time difference 3n, where n is a positive integer greater than 2. Not all the time difference 31, ..., and the time difference 3n are necessarily different from each other. The BBU obtains the average relative frequency deviation 1 through calculation based on the at least two time differences 3. For the average relative frequency deviation 1, refer to the descriptions of the average relative phase frequency difference in the method shown in FIG. 3.

Step 609: The BBU corrects the local clock of the BBU based on the average relative frequency deviation 1.

For example, the average relative frequency deviation is used as input information of the data processing unit of the BBU, and is used by the BBU to correct the local clock of the BBU.

For step 607 to step 609, refer to the descriptions of step 303 in FIG. 3.

Step 610: The AAU obtains the local clock of the BBU as a system clock.

For this step, refer to descriptions of step 304 and step 305 in the method shown in FIG. 3.

For example, the AAU may obtain the local clock of the BBU from the BBU by using a fronthaul network. It should be understood that the local clock of the BBU obtained by the AAU in this step is a local clock of the BBU that is obtained through correction in step 609. The AAU updates information about the local clock of the BBU to the local clock of the AAU, that is, the AAU uses the local clock of the BBU as the system clock. Specifically, an interface unit of the AAU obtains the local clock of the BBU from the BBU by using the fronthaul network, and sends the local clock of the BBU to the data processing unit of the AAU. After obtaining the local clock of the BBU, the data processing unit of the AAU corrects time of a local clock module of the AAU.

It should be understood that the local clock of the BBU may be considered as a base station system clock obtained by synchronizing a standard clock source and a reference clock source of the access network device in which the BBU is located.

According to the method shown in this embodiment, a radio device in the access network device performs clock synchronization with a radio device control unit. This not only can further eliminate a part of errors in information transmission of the satellite, but also can improve reliability of clock synchronization. It should be understood that the method shown in this embodiment of this application is merely an example. During specific implementation, a plurality of GNSSs may be deployed on the AAU side, or one GNSS may be deployed in each of a plurality of AAUs. During actual deployment, accuracy of information about satellites obtained by different GNSSs is different. Therefore, the BBU may select an optimal time difference calculated by the AAU, that is, a time difference calculated by the AAU based on information about a satellite with best accuracy, and perform clock synchronization based on the time difference. Therefore, an effect of improving accuracy of a system clock of a base station can be achieved. In addition, a method in which a plurality of GNSSs may be deployed on an AAU side or GNSSs are deployed on a plurality of AAU sides may be used to ensure that at least one GNSS receiver on the AAU side can work, to further improve reliability and stability of the clock synchronization.

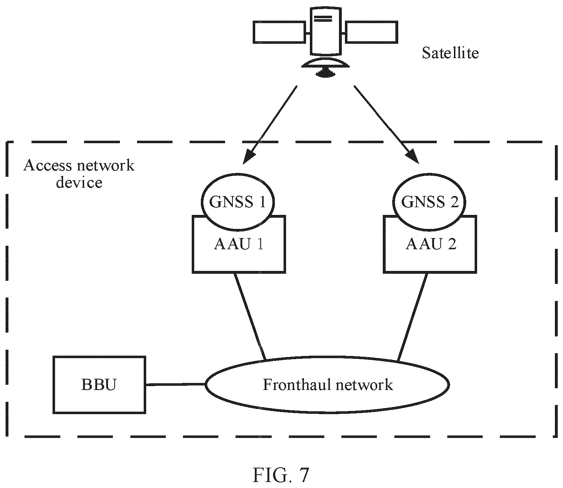

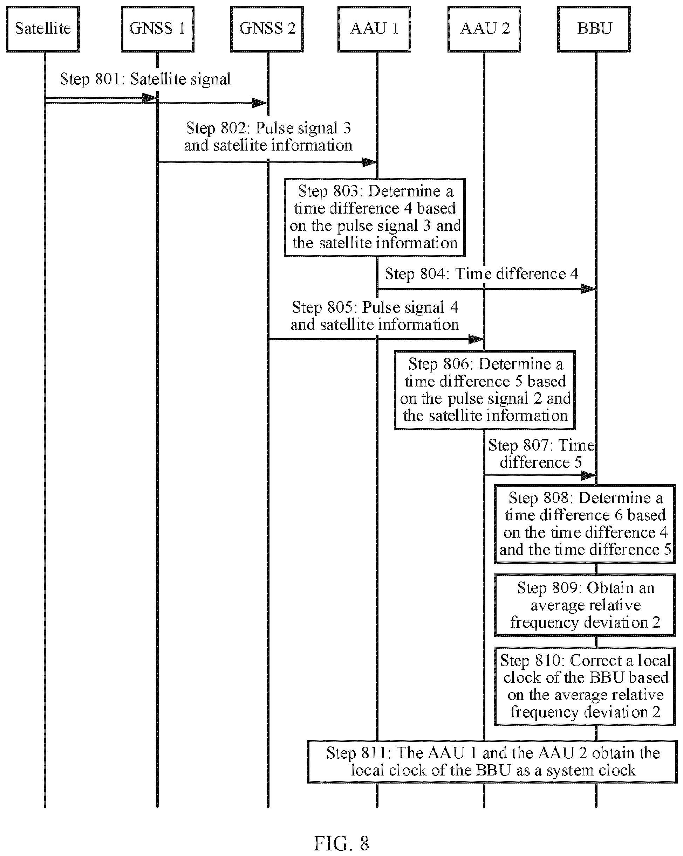

For example, two GNSSs, that is, a GNSS 1 and a GNSS 2, are deployed in a clock synchronization network architecture. FIG. 7 is a schematic diagram of a clock synchronization system architecture. As shown in FIG. 7, the GNSS 1 is deployed on an AAU 1 side, and the GNSS 2 is deployed on an AAU 2 side. In addition, an AAU 1 and an AAU 2 belong to a same access network device. Specifically, during deployment, the two GNSSs may be connected, through feeders, to the AAU sides on which the GNSSs are deployed. Based on the system architecture shown in FIG. 7 and with reference to the method shown in FIG. 4, FIG. 8 is a schematic interaction flowchart of a clock synchronization method according to an embodiment of this application. The method may include the following steps.

Step 801: A satellite sends satellite information to the GNSS 1 and the GNSS 2.

For the satellite information, refer to descriptions of the information about the satellite in the method shown in FIG. 4.

For this step, refer to the descriptions of step 601 in FIG. 6.

Step 802: The GNSS 1 sends a pulse signal 3 and the satellite information to the AAU 1.

For the AAU 1, refer to the descriptions of the second apparatus in the method shown in FIG. 4.

For the pulse signal 3 in the step, refer to the descriptions of the first pulse signal in step 401 in the method shown in FIG. 4 and the descriptions of the pulse signal 1 in step 602 in the method shown in FIG. 6.

Step 803: The AAU 1 determines a time difference 4 based on the pulse signal 3 and the satellite information.

For this step, refer to the descriptions of the action of the second apparatus in step 401 in the method shown in FIG. 4 and the descriptions of the action of the BBU in step 603 in FIG. 6. For the time difference 4, refer to the descriptions of the first time difference in the method shown in FIG. 4.

Step 804: The AAU 1 sends the time difference 4 to a BBU.

For this step, refer to the descriptions of the action of the second apparatus in step 402 in the method shown in FIG. 4. For the BBU, refer to the descriptions of the first apparatus in FIG. 4.

Step 805: The GNSS 2 sends a pulse signal 4 and the satellite information to the AAU 2.

For the pulse signal 4 in the step, refer to the descriptions of the second pulse signal in step 401 in the method shown in FIG. 4 and the descriptions of the pulse signal 2 in step 604 in FIG. 6.

For the AAU 2, refer to the descriptions of the third apparatus in step 401 in the method shown in FIG. 4.

Step 806: The AAU 2 determines a time difference 5 based on the pulse signal 4 and the satellite information.

For this step, refer to the descriptions of the action of the third apparatus in step 401 in the method shown in FIG. 4 and the descriptions of the action of the AAU in step 605 in FIG. 6.

For the time difference 5, refer to the descriptions of the second time difference in FIG. 4.

Step 807: The AAU 2 sends the time difference 5 to the BBU.

For this step, refer to the descriptions of the action of the third apparatus in step 402 in the method shown in FIG. 4.

It should be understood that execution of step 802 to step 804 is independent of execution of step 805 to step 807, but both step 802 to step 804 and step 805 to step 807 should be completed before step 808.

Step 808: The BBU determines a time difference 6 based on the time difference 4 and the time difference 5.

Step 809: The BBU obtains an average relative frequency deviation 2.

Step 810: The BBU corrects a local clock of the BBU based on the average relative frequency deviation 2.

For step 808 to step 810, refer to the descriptions of the action of the first apparatus in step 403 in FIG. 4 and refer to the descriptions of the action of the BBU in step 607 to step 609 in FIG. 6.

Step 811: The AAU 1 and the AAU 2 obtain the local clock of the BBU as a system clock.

For the AAU 1 and the AAU 2 in this step, refer to the descriptions of the actions of the second apparatus and the third apparatus in step 404 and step 405 in the method shown in FIG. 4 and the descriptions of the action of the AAU in step 610 in FIG. 6.

For beneficial effects of the implementation method shown in the figure, refer to the descriptions in FIG. 6.

It should be understood that the method shown in this embodiment of this application is merely an example. During specific implementation, a plurality of GNSSs may be deployed on the AAU side, or GNSSs may be separately deployed in at least three AAUs, so that an effect of improving accuracy of a system clock of a base station can be achieved. In addition, a method in which a plurality of GNSSs are deployed on the AAU side or GNSSs are deployed on at least three AAU sides may be used to implement an effect of mutual backup between the GNSSs, to improve reliability and stability of time serving performed in the method.

In addition, the action of the BBU in the method shown in FIG. 8 may alternatively be performed by an AAU 3. To be specific, in the access network device, there are three AAUs: the AAU 1, the AAU 2, and the AAU 3. The AAU 3 obtains a time difference between the AAU 1 and the satellite from the AAU 1 and the AAU 2, obtains a time difference between the AAU 2 and the satellite, and corrects a local clock of the AAU 3 based on the time difference between the AAU 1 and the satellite and the time difference between the AAU 2 and the satellite. After the AAU 3 corrects the local clock, the AAU 1 and the AAU 2 are synchronized with the AAU 3. Finally, clock synchronization of a communication system is implemented.

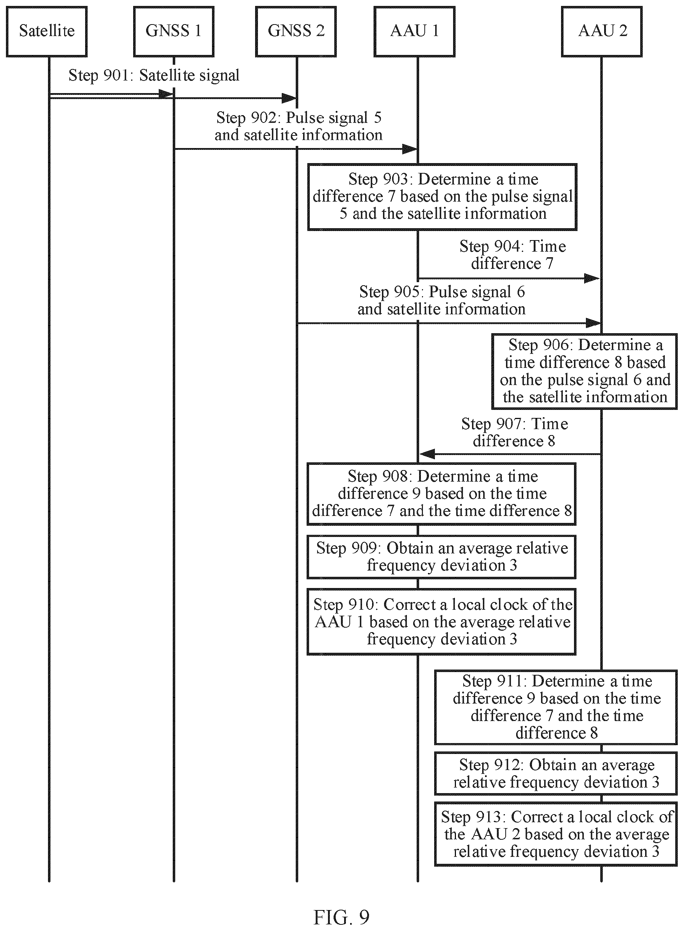

Based on the system architecture shown in FIG. 7, FIG. 9 is a schematic interaction flowchart of another clock synchronization method according to an embodiment of this application. Specifically, the method may include the following steps.

Step 901: A satellite sends satellite information to the GNSS 1 and the GNSS 2.

For this step, refer to the descriptions of step 601 in FIG. 6.

Step 902: The GNSS 1 sends a pulse signal 5 and the satellite information to the AAU 1.

For the pulse signal 5 in the step, refer to the descriptions of the pulse signal 1 in step 602 in FIG. 6.

Step 903: The AAU 1 determines a time difference 7 based on the pulse signal 5 and the satellite information.

For the time difference 7, refer to the descriptions of the time difference 1 in step 603 in FIG. 6.

Step 904: The AAU 1 sends the time difference 7 to the AAU 2.

Step 905: The GNSS 2 sends a pulse signal 6 and the satellite information to the AAU 2.

For the pulse signal 6 in the step, refer to the descriptions of the pulse signal 1 in step 602 in FIG. 6.

Step 906: The AAU 2 determines a time difference 8 based on the pulse signal 6 and the satellite information.

For the time difference 8, refer to the descriptions of the time difference 1 in step 603 in FIG. 6.

Step 907: The AAU 2 sends the time difference 8 to the AAU 1.

It should be understood that execution of step 902 to step 904 is independent of execution of step 905 to step 907, but step 902 to step 904 and step 905 to step 907 should be completed before step 908.

Step 908: The AAU 1 determines a time difference 9 based on the time difference 7 and the time difference 8.

Step 909: The AAU 1 obtains an average relative frequency deviation 3.

Step 910: The AAU 1 corrects a local clock of the AAU 1 based on the average relative frequency deviation 3.

For step 908 to step 910, refer to the descriptions of the actions of the BBU in step 607 to step 609 in FIG. 6.

Step 911: The AAU 2 determines a time difference 9 based on the time difference 7 and the time difference 8.

Step 912: The AAU 2 obtains an average relative frequency deviation 3.

Step 913: The AAU 2 corrects a local clock of the AAU 2 based on the average relative frequency deviation 3.

For step 911 to step 913, refer to the descriptions of the actions of the BBU in step 607 to step 609 in FIG. 6.

It should be understood that execution of step 908 to step 910 is independent of execution of step 911 to step 913. Any one of step 908 to step 910 does not need to be performed before any one of step 911 to step 913.

In other words, in the method shown in FIG. 9, the AAU 1 and the AAU 2 do not need to rely on the BBU to perform clock synchronization. For beneficial effects of FIG. 9, refer to the descriptions of the foregoing method. Details are not described again.

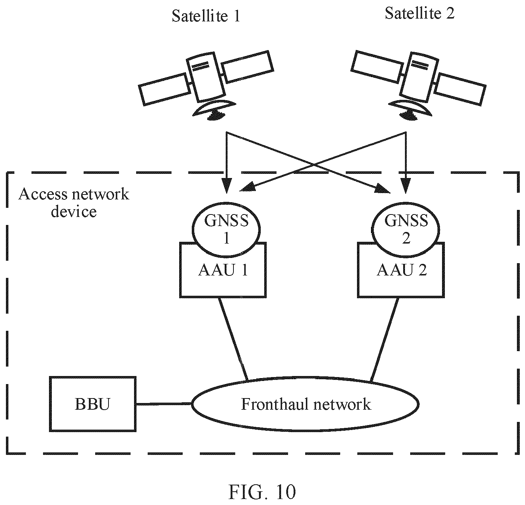

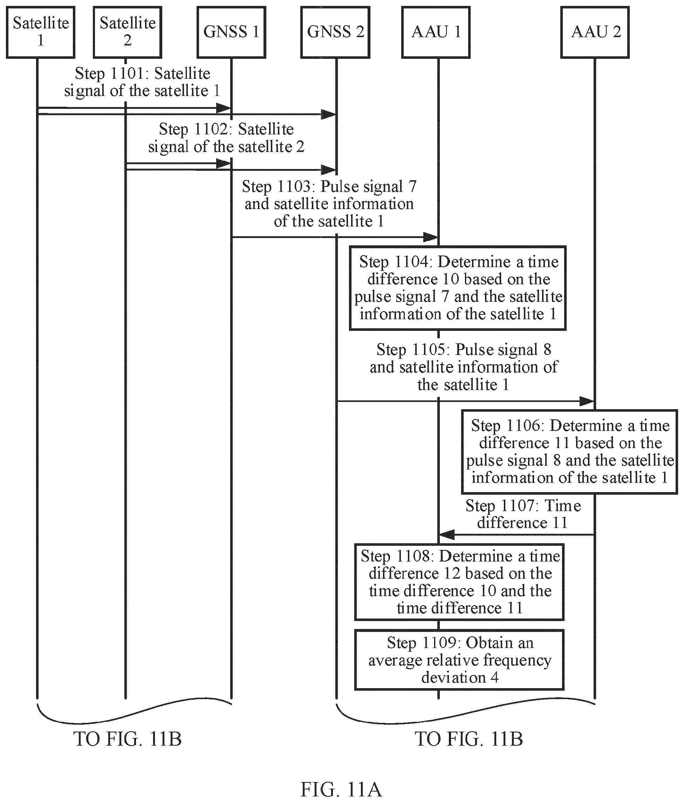

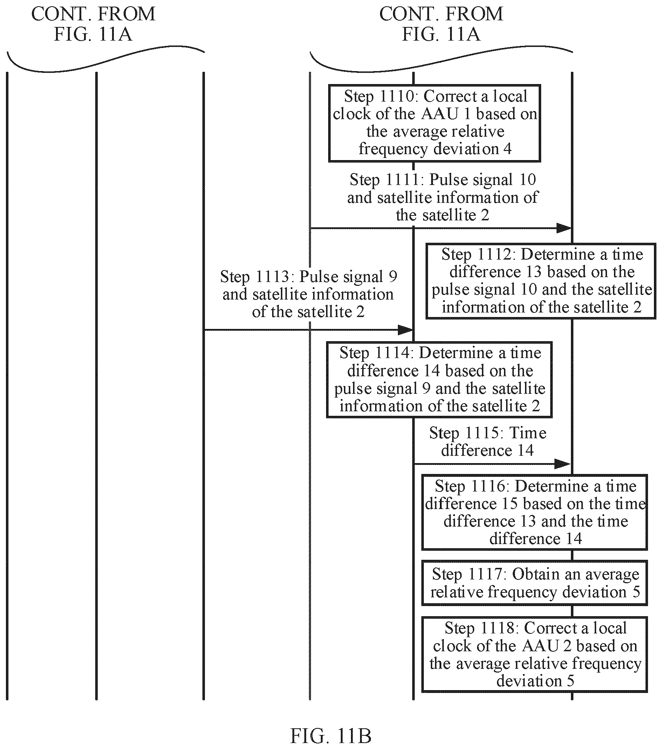

FIG. 10 is a schematic diagram of still another system architecture to which this application is applicable. A difference between the architectures shown in FIG. 10 and in FIG. 7 lies in that a method in which clock synchronization is performed based on a plurality of satellites is applicable to the architecture shown in FIG. 10. Based on the system architecture shown in FIG. 10, FIG. 11A and FIG. 11B are a schematic interaction flowchart of still another clock synchronization method according to an embodiment of this application. Specifically, the method may include the following steps.

Step 1101: A satellite 1 sends satellite information of the satellite 1 to a GNSS 1 and a GNSS 2.

Step 1102: A satellite 2 sends satellite information of the satellite 2 to the GNSS 1 and the GNSS 2.

For step 1101 and step 1102, refer to the descriptions of step 601 in FIG. 6.

An execution sequence of step 1101 and step 1102 is not limited in this application.

Step 1103: The GNSS 1 sends a pulse signal 7 and the satellite information of the satellite 1 to an AAU 1.

For the pulse signal 7 in the step, refer to the descriptions of the pulse signal 1 in step 602 in FIG. 6. For the satellite information of the satellite 1, refer to the descriptions of the satellite information in FIG. 6.

Step 1104: The AAU 1 determines a time difference 10 based on the pulse signal 7 and the satellite information of the satellite 1.

For the time difference 10, refer to the descriptions of the time difference 1 in step 603 in FIG. 6.

Step 1105: The GNSS 2 sends a pulse signal 8 and the satellite information of the satellite 1 to an AAU 2.

For the pulse signal 8 in the step, refer to the descriptions of the pulse signal 1 in step 602 in FIG. 6.

Step 1106: The AAU 2 determines a time difference 11 based on the pulse signal 8 and the satellite information of the satellite 1.

For the time difference 11, refer to the descriptions of the time difference 1 in step 603 in FIG. 6.

Step 1107: The AAU 2 sends the time difference 11 to the AAU 1.

Step 1108: The AAU 1 determines a time difference 12 based on the time difference 10 and the time difference 11.

Step 1109: The AAU 1 obtains an average relative frequency deviation 4.

Step 1110: The AAU 1 corrects a local clock of the AAU 1 based on the average relative frequency deviation 4.

For step 1108 to step 1110, refer to the descriptions of the actions of the BBU in step 607 to step 6009 in FIG. 6.

It should be understood that execution of step 1103 and step 1104 is independent of execution of step 1105 to step 1107, but step 1103 and step 1104 and step 1105 to step 1107 should be completed before step 1108.

Step 1111: The GNSS 2 sends a pulse signal 10 and the satellite information of the satellite 2 to the AAU 2.

For the pulse signal 10 in the step, refer to the descriptions of the pulse signal 1 in step 602 in FIG. 6. For the satellite information of the satellite 2, refer to the descriptions of the satellite information in FIG. 6.

Step 1112: The AAU 2 determines a time difference 13 based on the pulse signal 10 and the satellite information of the satellite 2.

For the time difference 13, refer to the descriptions of the time difference 1 in step 603 in FIG. 6.

Step 1113: The GNSS 1 sends a pulse signal 9 and the satellite information of the satellite 2 to the AAU 1.

For the pulse signal 9 in the step, refer to the descriptions of the pulse signal 1 in step 602 in FIG. 6.

Step 1114: The AAU 2 determines a time difference 14 based on the pulse signal 9 and the satellite information of the satellite 2.

For the time difference 14, refer to the descriptions of the time difference 1 in step 603 in FIG. 6.

Step 1115: The AAU 1 sends the time difference 14 to the AAU 2.

It should be understood that execution of step 1111 and step 1112 is independent of execution of step 1113 to step 1115, and step 1111 and step 1112 and step 1113 to step 1115 should be completed before step 1116.

Step 1116: The AAU 2 determines a time difference 15 based on the time difference 13 and the time difference 14.

Step 1117: The AAU 2 obtains an average relative frequency deviation 5.

Step 1118: The AAU 2 corrects a local clock of the AAU 2 based on the average relative frequency deviation 5.

For step 1116 to step 1118, refer to the descriptions of the actions of the BBU in step 607 to step 609 in FIG. 6.

It should be understood that execution of step 1103 to step 1110 is independent of execution of step 11111 to step 1118.

In this embodiment, the AAU 1 and the AAU 2 may correct respective local clocks with reference to different satellites. In other words, the AAU 1 may choose to correct the local clock of the AAU 1 with reference to the satellite 1, and the AAU 2 may choose to correct the local clock of the AAU 2 with reference to the satellite 2. In addition, the AAU 1 does not need to rely on a BBU to perform clock synchronization, and may independently select different satellites for clock synchronization.

For beneficial effects of the implementation method shown in the figure, refer to the descriptions in FIG. 6.

Correspondingly, an embodiment of this application further provides a communication apparatus. The communication apparatus may be any one of the first apparatus, the second apparatus, the third apparatus, the BBU, the AAU, the AAU 1, the AAU 2, and the AAU 3 in the foregoing method embodiments, an apparatus that includes a function of any one of the first apparatus, the second apparatus, the third apparatus, the BBU, the AAU, the AAU 1, the AAU 2, and the AAU 3, or a component whose function is similar to that of any one of the first apparatus, the second apparatus, the third apparatus, the BBU, the AAU, the AAU 1, the AAU 2, and the AAU 3. It may be understood that, to implement the foregoing functions, the communication apparatus includes a corresponding hardware structure and/or software module for performing each function. A person skilled in the art should easily be aware that with reference to the units and algorithm steps in the examples described in embodiments disclosed in this specification, this application can be implemented in a form of hardware or a combination of hardware and computer software. Whether a specific function is performed by hardware or hardware driven by computer software depends on particular applications and design constraints of the technical solutions. A person skilled in the art may use different methods to implement the described functions of each particular application, but it should not be considered that the implementation goes beyond the scope of this application.

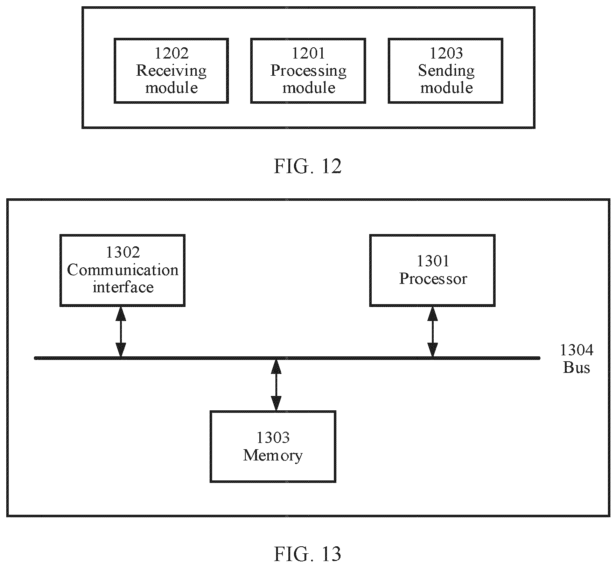

FIG. 12 is a schematic diagram of a communication apparatus according to an embodiment of this application.

The communication apparatus includes a processing module 1201, a receiving module 1202, and a sending module 1203. The processing module 1201 is configured to implement data processing by the communication apparatus. The receiving module 1202 is configured to receive content between the communication apparatus and another unit or network element. The sending module 1203 is configured to receive content between the communication apparatus and another unit or network element. It should be understood that the processing module 1201 in this embodiment of this application may be implemented by a processor or a processor-related circuit component (which is also referred to as a processing circuit), and the receiving module 1202 may be implemented by a receiver or a receiver-related circuit component. The sending module 1203 may be implemented by a transmitter or a transmitter-related circuit component.

For example, the communication apparatus may be a communication device, or may be a chip used in a communication device or another combined device or component that has a function of the foregoing communication device.

For example, the communication apparatus may be the first apparatus or the BBU in any one of FIG. 3 to FIG. 6, the AAU 1 or the AAU 2 in any one of FIG. 7 and FIG. 9, or the AAU 1 or the AAU 2 in either of FIG. 10 and FIG. 11A and FIG. 11B.

When the communication apparatus is the first apparatus or the BBU in any one of FIG. 3 to FIG. 6, the AAU 1 or the AAU 2 in any one of FIG. 7 and FIG. 9, or the AAU 1 or the AAU 2 in either of FIG. 10 and FIG. 11A and FIG. 11B, the processing module 1201 is configured to obtain a first time difference (for example, step 301, step 603, step 903, step 1104, and step 1112). The first time difference is a time difference between the first apparatus and a satellite. The first time difference is determined based on a first pulse signal and information about the satellite. The receiving module 1202 is configured to obtain a second time difference (for example, step 302, step 606, step 907, step 1107, and step 1115). The second time difference is a time difference between a second apparatus and the satellite. The second time difference comes from the second apparatus. The first apparatus and the second apparatus belong to a same access network device. The processing module 1201 is further configured to obtain clock synchronization information between the first apparatus and the second apparatus based on the first time difference and the second time difference (for example, step 303, step 607 to step 609, step 908 to step 910, step 1108 to step 1110, and step 1116 to step 1118).

In addition, the foregoing modules may be further configured to support another process of the technology described in this specification. For beneficial effects, refer to the foregoing descriptions. Details are not described herein again.

For example, the communication apparatus may be the second apparatus, the third apparatus, the AAU 1, or the AAU 2 in any one of FIG. 3 to FIG. 11A and FIG. 11B.

When the communication apparatus is the second apparatus, the third apparatus, the AAU 1, or the AAU 2 in any one of FIG. 3 to FIG. 11A and FIG. 11B, the sending module 1203 is configured to send a second time difference to a first apparatus (for example, step 302, step 402, step 606, step 807, step 907, step 1107, and step 1115). The first apparatus and the second apparatus belong to a same access network device. The second time difference is determined based on a second pulse signal and information about a satellite. The second time difference is a time difference between the second apparatus and the satellite. The receiving module 1202 is configured to receive clock synchronization information from the first apparatus (for example, step 304, step 404, step 610, and step 811). The processing module 1201 is configured to obtain local clock information of the second apparatus based on the clock synchronization information (for example, step 305, step 405, step 610, and step 811).

In addition, the foregoing modules may be further configured to support another process of the technology described in this specification. For beneficial effects, refer to the foregoing descriptions. Details are not described herein again.

For example, the communication apparatus may be the first apparatus or the BBU in any one of FIG. 4, FIG. 7, or FIG. 8.

When the communication apparatus is the first apparatus or the BBU in any one of FIG. 4, FIG. 7, or FIG. 8, the receiving module 1202 is configured to receive a first time difference from a second apparatus, where the first time difference is a time difference between the second apparatus and a satellite; and receive a second time difference from a third apparatus, where the second time difference is a time difference between the third apparatus and the satellite (for example, step 402, step 804, and step 807). The first apparatus, the second apparatus, and the third apparatus belong to a same access network device. The processing module 1201 is configured to obtain clock synchronization information among the first apparatus, the second apparatus, and the third apparatus based on the first time difference and the second time difference (for example, step 403 and step 808 to step 810).

In addition, the foregoing modules may be further configured to support another process of the technology described in this specification. For beneficial effects, refer to the foregoing descriptions. Details are not described herein again.

FIG. 13 is a schematic diagram of another communication apparatus according to an embodiment of this application. The communication apparatus includes a processor 1301, a communication interface 1302, and a memory 1303. The processor 1301, the communication interface 1302, and the memory 1303 may be connected to each other through a bus 1304. The bus 1304 may be a peripheral component interconnect (peripheral component interconnect, PCI) bus, an extended industry standard architecture (extended industry standard architecture, EISA) bus, or the like. The bus 1304 may be classified into an address bus, a data bus, a control bus, and the like. To facilitate representation, the bus is represented by only a line in FIG. 13, but it does not indicate that there is only one bus or one type of bus. The processor 1301 may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), generic array logic (Generic Array Logic, GAL), or any combination thereof. The memory 1303 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache.

The processor 1301 is configured to implement a data processing operation of the communication apparatus. The communication interface 1302 is configured to implement a receiving operation and a sending operation of the communication apparatus.

For example, the communication apparatus may be the first apparatus or the BBU in any one of FIG. 3 to FIG. 6, the AAU 1 or the AAU 2 in any one of FIG. 7 and FIG. 9, or the AAU 1 or the AAU 2 in either of FIG. 10 and FIG. 11A and FIG. 11B.

When the communication apparatus is the first apparatus or the BBU in any one of FIG. 3 to FIG. 6, the AAU 1 or the AAU 2 in any one of FIG. 7 and FIG. 9, or the AAU 1 or the AAU 2 in either of FIG. 10 and FIG. 11A and FIG. 11B, the processor 1301 is configured to obtain a first time difference (for example, step 301, step 603, step 903, step 1104, and step 1112). The first time difference is a time difference between the first apparatus and a satellite. The first time difference is determined based on a first pulse signal and information about the satellite. The communication interface 1302 is configured to obtain a second time difference (for example, step 302, step 606, step 907, step 1107, and step 1115). The second time difference is a time difference between a second apparatus and the satellite. The second time difference comes from the second apparatus. The first apparatus and the second apparatus belong to a same access network device. The processor 1301 is further configured to obtain clock synchronization information between the first apparatus and the second apparatus based on the first time difference and the second time difference (for example, step 303, step 607 to step 609, step 908 to step 910, step 1108 to step 1110, and step 1116 to step 1118).

In addition, the foregoing modules may be further configured to support another process of the technology described in this specification. For beneficial effects, refer to the foregoing descriptions. Details are not described herein again.

For example, the communication apparatus may be the second apparatus, the third apparatus, the AAU 1, or the AAU 2 in any one of FIG. 3 to FIG. 11A and FIG. 11B.

When the communication apparatus is the second apparatus, the third apparatus, the AAU 1, or the AAU 2 in any one of FIG. 3 to FIG. 11A and FIG. 11B, the communication interface 1302 is configured to send a second time difference to a first apparatus (for example, step 302, step 402, step 606, step 807, step 907, step 1107, and step 1115). The first apparatus and the second apparatus belong to a same access network device. The second time difference is determined based on a second pulse signal and information about a satellite. The second time difference is a time difference between the second apparatus and the satellite. The communication interface 1302 is configured to receive clock synchronization information from the first apparatus (for example, step 304, step 404, step 610, and step 811). The processor 1301 is configured to obtain local clock information of the second apparatus based on the clock synchronization information (for example, step 305, step 405, step 610, and step 811).

In addition, the foregoing modules may be further configured to support another process of the technology described in this specification. For beneficial effects, refer to the foregoing descriptions. Details are not described herein again.

For example, the communication apparatus may be the first apparatus or the BBU in any one of FIG. 4, FIG. 7, or FIG. 8.

When the communication apparatus is the first apparatus or the BBU in any one of FIG. 4, FIG. 7, or FIG. 8, the communication interface 1302 is configured to receive a first time difference from a second apparatus, where the first time difference is a time difference between the second apparatus and a satellite; and receive a second time difference from a third apparatus, where the second time difference is a time difference between the third apparatus and the satellite (for example, step 402, step 804, and step 807). The first apparatus, the second apparatus, and the third apparatus belong to a same access network device. The processor 1301 is configured to obtain clock synchronization information among the first apparatus, the second apparatus, and the third apparatus based on the first time difference and the second time difference (for example, step 403 and step 808 to step 810).

In addition, the foregoing modules may be further configured to support another process of the technology described in this specification. For beneficial effects, refer to the foregoing descriptions. Details are not described herein again.

An embodiment of this application provides a communication system, including a first communication apparatus and a second communication apparatus. The first communication apparatus performs the method performed by the first apparatus, the AAU 1, the AAU 2, and the BBU in the embodiment shown in any one of FIG. 3 to FIG. 11A and FIG. 11B. The second communication apparatus performs the method performed by the second apparatus, the AAU, the AAU 1, and the AAU 2 in the embodiment shown in any one of FIG. 3 to FIG. 11A and FIG. 11B.

In a possible design, the communication system further includes a third communication apparatus. The third communication apparatus performs the actions of the third apparatus in FIG. 4 or the AAU 2 in FIG. 9.

An embodiment of this application further provides a computer-readable storage medium. The computer-readable storage medium stores a computer program. When the computer program is executed by a computer, the computer may perform the method performed by the first apparatus, the second apparatus, the third apparatus, the AAU 1, the AAU 2, and the BBU in the embodiment shown in any one of FIG. 3 to FIG. 11A and FIG. 11B, or the computer may perform the method performed by the first apparatus, the second apparatus, the third apparatus, the AAU 1, the AAU 2, and the BBU in the embodiment shown in any one of FIG. 3 to FIG. 11A and FIG. 11B.

An embodiment of this application further provides a computer program product. The computer program product is configured to store a computer program. When the computer program is executed by a computer, the computer may perform the method performed by the first apparatus, the second apparatus, the third apparatus, the AAU 1, the AAU 2, and the BBU in the embodiment shown in any one of FIG. 3 to FIG. 11A and FIG. 11B, or the computer may perform the method performed by the first apparatus, the second apparatus, the third apparatus, the AAU 1, the AAU 2, and the BBU in the embodiment shown in any one of FIG. 3 to FIG. 11A and FIG. 11B.

This application further provides a chip, including a processor. The processor is configured to read and run the computer program stored in a memory, to perform corresponding operations and/or procedures in the method performed by the first apparatus, the second apparatus, the third apparatus, the AAU 1, the AAU 2, and the BBU in the clock synchronization method provided in this application. Optionally, the chip further includes a memory. The memory and the processor are connected through a circuit or a wire. The processor is configured to read and execute a computer program in the memory. Optionally, the memory may alternatively be a memory located outside the chip. Further, optionally, the chip further includes a communication interface. The processor is connected to the communication interface. The communication interface is configured to receive processed data and/or information. The processor obtains the data and/or the information from the communication interface, and processes the data and/or the information. The communication interface may be an input/output interface, an interface circuit, an output circuit, an input circuit, a pin, a related circuit, or the like on the chip. The processor may alternatively be embodied as a processing circuit or a logic circuit.

The chip may alternatively be replaced with a chip system. Details are not described herein again.

The terms "include", "have", and any variants thereof in this application are intended to cover a non-exclusive inclusion. For example, a process, a method, a system, a product, or a device that includes a series of steps or units is not necessarily limited to those steps or units that are clearly listed, but may include other steps or units not expressly listed or inherent to such a process, method, product or device.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

It may be clearly understood by a person skilled in the art that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate components may or may not be physically separate, and components displayed as units may or may not be physical units, to be specific, may be located in one place, or may be distributed on a plurality of network units. Some or all of the units may be selected according to actual conditions to achieve the objectives of the solutions in this embodiment.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes: any medium that can store program code, such as a USB flash drive, a removable hard disk, a read-only memory (read-only memory, ROM), a random access memory (random access memory, RAM), a magnetic disk, or an optical disc.

In addition, the terms "first", "second", and the like in the specification, the claims, and the accompanying drawings of this application are intended to distinguish between different objects, but are not intended to describe a specific order. In addition, terms such as "include" and "have" and any other variants thereof are intended to cover a non-exclusive inclusion. For example, a process, a method, a system, a product, or a device that includes a series of steps or units is not limited to the listed steps or units, but optionally further includes other unlisted steps or units, or optionally further includes other steps or units inherent to such a process, method, product, or device.

Although this application has been described with reference to specific features and embodiments thereof, it is clear that various modifications and combinations may be made to this application without departing from the spirit and scope of this application. Correspondingly, the specification and the accompanying drawings are merely example descriptions of this application defined in the appended claims, and are considered as any of or all modifications, variations, combinations that cover the scope of this application. Clearly, a person skilled in the art can make various modifications and variations to this application without departing from the scope of this application. In this case, if the modifications and variations made to this application fall within the scope of the claims of this application this application is intended to include these modifications and variations.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A clock synchronization method, wherein the method comprises:
obtaining (Step 301, Step 303), by a first apparatus, a first time difference and a second time difference, wherein the first time difference is a time difference between the first apparatus and a satellite, the first time difference is determined based on a first pulse signal and information about the satellite, the second time difference is a time difference between a second apparatus and the satellite, the second time difference comes from the second apparatus, and the first apparatus and the second apparatus belong to a same access network device; and
obtaining (Step 304), by the first apparatus, clock synchronization information between the first apparatus and the second apparatus based on the first time difference and the second time difference.

2. The method according to claim 1, further comprising:
sending (Step 305), by the first apparatus, the clock synchronization information to the second apparatus.

3. The method according to claim 1 or 2, wherein that the first apparatus and the second apparatus belong to a same access network device comprises:
the first apparatus is a wireless device controller in the access network device, and the second apparatus is a wireless device in the access network device.

4. The method according to claim 1 or 2, wherein that the first apparatus and the second apparatus belong to a same access network device comprises:
both the first apparatus and the second apparatus are wireless devices in the access network device.

5. The method according to any one of claims 1 to 4, wherein the first pulse signal is a pulse per second signal.

6. The method according to any one of claims 1 to 5, wherein the information about the satellite comprises an identifier of the satellite, and further comprises at least one of the following: time information of the satellite, status information of the satellite, and ephemeris data information of the satellite.

7. The method according to any one of claims 1 to 6, wherein the obtaining, by the first apparatus, clock synchronization information between the first apparatus and the second apparatus based on the first time difference and the second time difference comprises:
calculating, by the first apparatus, a third time difference based on the first time difference and the second time difference;
determining, by the first apparatus, an average relative phase frequency difference based on the third time difference; and
adjusting, by the first apparatus, local clock information of the first apparatus based on the average relative phase frequency difference.

8. The method according to any one of claims 1 to 7, wherein that the first time difference is determined based on a first pulse signal and information about the satellite comprises:
receiving, by the first apparatus, the first pulse signal and the information about the satellite from a first satellite receiver; and
determining, by the first apparatus, the first time difference based on the first pulse signal and the information about the satellite.

9. A clock synchronization method, wherein the method comprises:
sending (Step 303), by a second apparatus, a second time difference to a first apparatus, wherein the second time difference is determined based on a second pulse signal and information about a satellite, the second time difference is a time difference between the second apparatus and the satellite, and the first apparatus and the second apparatus belong to a same access network device;
receiving (Step 305), by the second apparatus, clock synchronization information from the first apparatus; and
obtaining (Step 306), by the second apparatus, local clock information of the second apparatus based on the clock synchronization information.

10. The method according to claim 9, wherein that the first apparatus and the second apparatus belong to a same access network device comprises:
the first apparatus is a wireless device controller in the access network device, and the second apparatus is a wireless device in the access network device.

11. The method according to claim 9, wherein that the first apparatus and the second apparatus belong to a same access network device comprises:
both the first apparatus and the second apparatus are wireless devices in the access network device.

12. The method according to any one of claims 9 to 11, wherein the second pulse signal is a pulse per second signal.

13. The method according to any one of claims 9 to 12, wherein the information about the satellite comprises an identifier of the satellite, and the information about the satellite further comprises at least one of the following: time information of the satellite, status information of the satellite, and ephemeris data information of the satellite.

14. The method according to any one of claims 9 to 13, wherein the sending, by a second apparatus, a second time difference to a first apparatus, wherein the second time difference is determined based on a second pulse signal and information about a satellite comprises:
receiving, by the second apparatus, the second pulse signal and the information about the satellite from a second satellite receiver; and
determining, by the second apparatus, the second time difference based on the second pulse signal and the information about the satellite.

15. A communication apparatus, wherein the communication apparatus is configured to perform the method according to any one of claims 1 to 8, claims 9 to 14.

## Patentansprüche

1. Taktsynchronisationsverfahren, wobei das Verfahren umfasst:
Erhalten (Schritt 301, Schritt 303), durch eine erste Einrichtung, einer ersten Zeitdifferenz und einer zweiten Zeitdifferenz, wobei die erste Zeitdifferenz eine Zeitdifferenz zwischen der ersten Einrichtung und einem Satelliten ist, die erste Zeitdifferenz basierend auf einem ersten Impulssignal und Informationen über den Satelliten bestimmt wird, die zweite Zeitdifferenz eine Zeitdifferenz zwischen einer zweiten Einrichtung und dem Satelliten ist, die zweite Zeitdifferenz von der zweiten Einrichtung stammt und die erste Einrichtung und die zweite Einrichtung zu einer gleichen Zugangsnetzwerkvorrichtung gehören; und
Erhalten (Schritt 304), durch die erste Einrichtung, von Taktsynchronisationsinformationen zwischen der ersten Einrichtung und der zweiten Einrichtung basierend auf der ersten Zeitdifferenz und der zweiten Zeitdifferenz.

2. Verfahren nach Anspruch 1, das ferner umfasst:
Senden (Schritt 305), durch die erste Einrichtung, der Taktsynchronisationsinformation an die zweite Einrichtung.

3. Verfahren nach Anspruch 1 oder 2, wobei, dass die erste Einrichtung und die zweite Einrichtung zu einer gleichen Zugangsnetzwerkvorrichtung gehören, umfasst:
die erste Einrichtung ist eine Drahtlosvorrichtungssteuerung in der Zugangsnetzwerkvorrichtung und die zweite Einrichtung ist eine Drahtlosvorrichtung in der Zugangsnetzwerkvorrichtung.

4. Verfahren nach Anspruch 1 oder 2, wobei, dass die erste Einrichtung und die zweite Einrichtung zu einer gleichen Zugangsnetzwerkvorrichtung gehören, umfasst:
sowohl die erste Einrichtung als auch die zweite Einrichtung sind Drahtlosvorrichtungen in der Zugangsnetzwerkvorrichtung.

5. Verfahren nach einem der Ansprüche 1 bis 4, wobei das erste Impulssignal ein Impuls-pro-Sekunde-Signal ist.

6. Verfahren nach einem der Ansprüche 1 bis 5, wobei die Informationen über den Satelliten eine Kennung des Satelliten umfassen und ferner mindestens eine der folgenden umfassen: Zeitinformationen des Satelliten, Statusinformationen des Satelliten und Ephemeridendateninformationen des Satelliten.

7. Verfahren nach einem der Ansprüche 1 bis 6, wobei das Erhalten, durch die erste Einrichtung, von Taktsynchronisationsinformationen zwischen der ersten Einrichtung und der zweiten Einrichtung basierend auf der ersten Zeitdifferenz und der zweiten Zeitdifferenz umfasst:
Berechnen, durch die erste Einrichtung, einer dritten Zeitdifferenz basierend auf der ersten Zeitdifferenz und der zweiten Zeitdifferenz;
Bestimmen, durch die erste Einrichtung, einer durchschnittlichen relativen Phasenfrequenzdifferenz basierend auf der dritten Zeitdifferenz; und
Einstellen, durch die erste Einrichtung, von lokalen Taktinformationen der ersten Einrichtung basierend auf der durchschnittlichen relativen Phasenfrequenzdifferenz.

8. Verfahren nach einem der Ansprüche 1 bis 7, wobei, dass die erste Zeitdifferenz basierend auf einem ersten Impulssignal und Informationen über den Satelliten bestimmt wird, umfasst:
Empfangen, durch die erste Einrichtung, des ersten Impulssignals und der Informationen über den Satelliten von einem ersten Satellitenempfänger; und
Bestimmen, durch die erste Einrichtung, der ersten Zeitdifferenz basierend auf dem ersten Impulssignal und den Informationen über den Satelliten.

9. Taktsynchronisationsverfahren, wobei das Verfahren umfasst:
Senden (Schritt 303), durch eine zweite Einrichtung, einer zweiten Zeitdifferenz an eine erste Einrichtung, wobei die zweite Zeitdifferenz basierend auf einem zweiten Impulssignal und Informationen über einen Satelliten bestimmt wird, die zweite Zeitdifferenz eine Zeitdifferenz zwischen der zweiten Einrichtung und dem Satelliten ist und die erste Einrichtung und die zweite Einrichtung zu einer gleichen Zugangsnetzwerkvorrichtung gehören;
Empfangen (Schritt 305), durch die zweite Einrichtung, von Taktsynchronisationsinformationen von der ersten Einrichtung; und
Erhalten (Schritt 306), durch die zweite Einrichtung, von lokalen Taktinformationen der zweiten Einrichtung basierend auf den Taktsynchronisationsinformationen.

10. Verfahren nach Anspruch 9, wobei, dass die erste Einrichtung und die zweite Einrichtung zu einer gleichen Zugangsnetznetzwerkvorrichtung gehören, umfasst:
die erste Einrichtung ist eine Drahtlosvorrichtungssteuerung in der Zugangsnetzwerkvorrichtung und die zweite Einrichtung ist eine Drahtlosvorrichtung in der Zugangsnetzwerkvorrichtung.

11. Verfahren nach Anspruch 9, wobei, dass die erste Einrichtung und die zweite Einrichtung zu einer gleichen Zugangsnetznetzwerkvorrichtung gehören, umfasst:
sowohl die erste Einrichtung als auch die zweite Einrichtung sind Drahtlosvorrichtungen in der Zugangsnetzwerkvorrichtung.

12. Verfahren nach einem der Ansprüche 9 bis 11, wobei das zweite Impulssignal ein Impuls-pro-Sekunde-Signal ist.

13. Verfahren nach einem der Ansprüche 9 bis 12, wobei die Informationen über den Satelliten eine Kennung des Satelliten umfassen und die Informationen über den Satelliten ferner mindestens eine der folgenden umfassen: Zeitinformationen des Satelliten, Statusinformationen des Satelliten und Ephemeridendateninformationen des Satelliten.

14. Verfahren nach einem der Ansprüche 9 bis 13, wobei das Senden, durch eine zweite Einrichtung, einer zweiten Zeitdifferenz an eine erste Einrichtung, wobei die zweite Zeitdifferenz basierend auf einem zweiten Impulssignal und Informationen über einen Satelliten bestimmt wird, umfasst:
Empfangen, durch die zweite Einrichtung, des zweiten Impulssignals und der Informationen über den Satelliten von einem zweiten Satellitenempfänger; und
Bestimmen, durch die zweite Einrichtung, der zweiten Zeitdifferenz basierend auf dem zweiten Impulssignal und den Informationen über den Satelliten.

15. Kommunikationseinrichtung, wobei die Kommunikationseinrichtung konfiguriert ist, um das Verfahren nach einem der Ansprüche 1 bis 8, der Ansprüche 9 bis 14 durchzuführen.

## Revendications

1. Procédé de synchronisation d'horloge, dans lequel le procédé comprend :
l'obtention (Étape 301, Étape 303), par un premier appareil, d'une première différence de temps et d'une deuxième différence de temps, dans lequel la première différence de temps est une différence de temps entre le premier appareil et un satellite, la première différence de temps est déterminée sur la base d'un premier signal d'impulsion et d'informations concernant le satellite, la deuxième différence de temps est une différence de temps entre un second appareil et le satellite, la deuxième différence de temps provient du second appareil, et le premier appareil et le second appareil appartiennent à un même dispositif de réseau d'accès ; et
l'obtention (Étape 304), par le premier appareil, d'informations de synchronisation d'horloge entre le premier appareil et le second appareil sur la base de la première différence de temps et de la deuxième différence de temps.

2. Procédé selon la revendication 1, comprenant en outre :
l'envoi (Étape 305), par le premier appareil, des informations de synchronisation d'horloge au second appareil.

3. Procédé selon la revendication 1 ou 2, dans lequel le fait que le premier appareil et le second appareil appartiennent à un même dispositif de réseau d'accès comprend :
le premier appareil est un dispositif de commande de dispositif sans fil dans le dispositif de réseau d'accès, et le second appareil est un dispositif sans fil dans le dispositif de réseau d'accès.

4. Procédé selon la revendication 1 ou 2, dans lequel le fait que le premier appareil et le second appareil appartiennent à un même dispositif de réseau d'accès comprend :
le premier appareil et le second appareil sont tous deux des dispositifs sans fil dans le dispositif de réseau d'accès.

5. Procédé selon l'une quelconque des revendications 1 à 4, dans lequel le premier signal d'impulsion est un signal d'impulsion par seconde.

6. Procédé selon l'une quelconque des revendications 1 à 5, dans lequel les informations concernant le satellite comprennent un identifiant du satellite, et comprennent en outre au moins l'une parmi ce qui suit : des informations temporelles du satellite, des informations d'état du satellite et des informations de données d'éphémérides du satellite.

7. Procédé selon l'une quelconque des revendications 1 à 6, dans lequel l'obtention, par le premier appareil, d'informations de synchronisation d'horloge entre le premier appareil et le second appareil sur la base de la première différence de temps et de la deuxième différence de temps comprend :
le calcul, par le premier appareil, d'une troisième différence de temps sur la base de la première différence de temps et de la deuxième différence de temps ;
la détermination, par le premier appareil, d'une différence de fréquence de phase relative moyenne sur la base de la troisième différence de temps ; et
le réglage, par le premier appareil, d'informations d'horloge locale du premier appareil sur la base de la différence de fréquence de phase relative moyenne.

8. Procédé selon l'une quelconque des revendications 1 à 7, dans lequel le fait que la première différence de temps est déterminée sur la base d'un premier signal d'impulsion et d'informations concernant le satellite comprend :
la réception, par le premier appareil, du premier signal d'impulsion et des informations concernant le satellite à partir d'un premier récepteur de satellite ; et
la détermination, par le premier appareil, de la première différence de temps sur la base du premier signal d'impulsion et des informations concernant le satellite.

9. Procédé de synchronisation d'horloge, dans lequel le procédé comprend :
l'envoi (Étape 303), par un second appareil, d'une deuxième différence de temps à un premier appareil, dans lequel la deuxième différence de temps est déterminée sur la base d'un second signal d'impulsion et d'informations concernant un satellite, la deuxième différence de temps est une différence de temps entre le second appareil et le satellite, et le premier appareil et le second appareil appartiennent à un même dispositif de réseau d'accès ;
la réception (Étape 305), par le second appareil, d'informations de synchronisation d'horloge à partir du premier appareil ; et
l'obtention (Étape 306), par le second appareil, d'informations d'horloge locale du second appareil sur la base des informations de synchronisation d'horloge.

10. Procédé selon la revendication 9, dans lequel le fait que le premier appareil et le second appareil appartiennent à un même dispositif de réseau d'accès comprend :
le premier appareil est un dispositif de commande de dispositif sans fil dans le dispositif de réseau d'accès, et le second appareil est un dispositif sans fil dans le dispositif de réseau d'accès.

11. Procédé selon la revendication 9, dans lequel le fait que le premier appareil et le second appareil appartiennent à un même dispositif de réseau d'accès comprend :
le premier appareil et le second appareil sont tous deux des dispositifs sans fil dans le dispositif de réseau d'accès.

12. Procédé selon l'une quelconque des revendications 9 à 11, dans lequel le second signal d'impulsion est un signal d'impulsion par seconde.

13. Procédé selon l'une quelconque des revendications 9 à 12, dans lequel les informations concernant le satellite comprennent un identifiant du satellite, et les informations concernant le satellite comprennent en outre au moins l'une parmi ce qui suit : des informations temporelles du satellite, des informations d'état du satellite, et des informations de données d'éphémérides du satellite.

14. Procédé selon l'une quelconque des revendications 9 à 13, dans lequel l'envoi, par un second appareil, d'une deuxième différence de temps à un premier appareil, dans lequel la deuxième différence de temps est déterminée sur la base d'un second signal d'impulsion et d'informations concernant un satellite comprend :
la réception, par le second appareil, du second signal d'impulsion et des informations concernant le satellite à partir d'un second récepteur satellite ; et
la détermination, par le second appareil, de la deuxième différence de temps sur la base du second signal d'impulsion et des informations concernant le satellite.

15. Appareil de communication, dans lequel l'appareil de communication est configuré pour effectuer le procédé selon l'une quelconque des revendications 1 à 8, des revendications 9 à 14.
